(19) **Europäisches Patentamt / European Patent Office / Office européen des brevets**

(11) **EP 1 906 180 B1**

(12) **EUROPEAN PATENT SPECIFICATION**

(45) Date of publication and mention
of the grant of the patent:
**24.07.2013 Bulletin 2013/30**

(51) Int Cl.:
*G01N 27/416* (2006.01)  *G01N 27/333* (2006.01)

(21) Application number: **07018705.9**

(22) Date of filing: **24.09.2007**

(54) **Method for detecting erroneous measurement results obtained with ion selective electrodes**

Verfahren zur Detektion von durch ionenselektive Elektroden erhaltenen falschen Messergebnissen

Procédé de détection de résultats de mesure erronés à l'aide d'électrodes sélectives d'ions

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.09.2006 EP 06020084
25.07.2007 EP 07014569**

(43) Date of publication of application:
**02.04.2008 Bulletin 2008/14**

(73) Proprietors:
• **F.Hoffmann-La Roche AG
4070 Basel (CH)**
Designated Contracting States:
**AT BE BG CH CY CZ DK EE ES FI FR GB GR HU
IE IS IT LI LT LU LV MC MT NL PL PT RO SE SI
SK TR**
• **Roche Diagnostics GmbH
68305 Mannheim (DE)**
Designated Contracting States:
**DE**

(72) Inventor: **Rauh, Juergen
5507 Mellingen (CH)**

(74) Representative: **Curcio, Mario et al
Roche Diagnostics International AG
Patents
Forrenstrasse 2
6343 Rotkreuz (CH)**

(56) References cited:
**EP-A- 0 364 948      EP-A- 0 667 522
US-A1- 2003 062 262**

• **G. J. KEMP: "Theoretical aspects of one-point
calibration: causes and effects of some potential
errors, and their dependence on concentration"
CLINICAL CHEMISTRY, vol. 30, no. 7, 1984,
XP002419499**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 906 180 B1

## Description

### Field of the invention

The invention concerns a method for measuring the concentration of at least two analytes in a biological liquid sample by means of a set of ion selective electrodes each of which is suitable for measuring one of those analytes, one of those analytes being sodium and another of those analytes being potassium.

The invention concerns in particular the use of such a method with ion-selective electrodes which are part of a clinical chemistry analyzer system.

### Background

Ion-selective electrode (ISE) techniques are routinely used in the clinical chemistry laboratories for the determination of sodium, potassium, or chloride. These ions are important regulators of various physiological functions, thus their monitoring/determination in patient samples (e.g. serum, plasma, or urine) is of great importance.

The underlying measurement principle is potentiometry. Devices employing ISEs use a measurement electrode, which is ideally selective only for the ion it should measure, and a reference electrode, which delivers a stable potential against which the measurement electrode's potential is read.

The sample (e.g. human serum, plasma, or urine) is placed in the sample channel in front of the ion selective membrane. A potential develops over this membrane, which under ideal circumstances only depends on the activity of the ion to be measured (the analyte).

That potential is derived via the contact pin and read against a stable signal delivered by the reference electrode. This reference electrode is the other half-cell of the measurement circuit.

The potential difference measured between the measurement electrode and the reference electrode is related to the concentration of the ion in question employing the Nernst equation as described e.g. in chapter of the book K Cammann, H Galster "Das Arbeiten mit ionenselektiven Elektroden", 3rd edition, Springer Verlag, 1996.

Each sample measurement consists of two separate measurements: the measurement of the sample material itself, and the subsequent one-point calibration. The one-point calibration is the measurement of a one-point calibrator of known concentration. The results of both, sample and one-point calibration measurement are expressed in millivolt.

These results, together with the electrode slope and other parameters determined during the main calibration (i.e. a two-point calibration), are used for the calculation of the final sample result (i.e. ion concentration), usually expressed in mmol/L (millimole per liter).

In clinical chemistry analyzers from various manufacturers, ISE modules containing sodium, potassium, and chloride selective electrodes are used for the routine determinations of those ions in human body fluid samples (such as serum, plasma, or urine) for diagnostic purposes. These modules allow the simultaneous determination of the analyte concentrations in one measurement from a given sample.

The results generated by such modules are of significant clinical relevance, and therefore care must be taken to ensure result integrity under all circumstances. Thus, the results are subjected to several checks and plausibility controls prior to their display on an instrument, or distribution to electronic laboratory information systems.

If, for instance, the signal generated for a given electrode (e.g. sodium) does not fulfill pre-defined criteria for the signal stability over time, a flag is generated and attached to the result informing the physician that the validity of the result may be doubtful. Samples for which flagged measurement results are obtained, are routinely re-analyzed, and for this purpose measurement of the sample in the ISE module is repeated.

Since in clinical chemistry it is very important to obtain accurate measurement results especially of the concentrations of sodium and potassium in biological samples, it is desirable to eliminate even very minute error possibilities.

A possible cause of a measurement error is the alteration of the measurement conditions, e.g. by the appearance of air bubbles in the sample channel.

Another possible cause of a measurement error are electrostatic discharges entering the shielded measuring compartment of an ISE module via waste lines and/or not properly grounded mechanical mounting parts. Such electrostatic discharges can cause shifts in the reference potential.

Such alterations can adversely influence the measurement results, because the potential difference measured between the measurement electrode and the reference electrode e.g. for the one-point calibration is used for the calculation of the concentrations of the analytes (e.g. sodium and potassium) in biological samples.

Deviations of the potential differences measured with ion-selective electrodes caused by relatively large disturbances are detected by known test and plausibility checks implemented in ISE modules. Small deviations of the potential differences measured with ion-selective electrodes as those caused by the above mentioned air-bubbles and electrostatic discharges, however, may remain undetected, and still adversely affect the measurement results.

The detection of small but abnormal deviations of the potential differences measured with ion-selective electrodes is difficult, because some of those deviations are not indicative for any malfunction or problem, but simply correspond to a concentration value which is higher or lower than an expected normal value.

In view of the foregoing, it is desirable to ensure that at one hand all questionable deviations, i.e. deviations of doubtful origin, are identified, and on the other hand, that valid measurement results are not identified as doubtful, since this would lead to unnecessary repetition of (correct) sample measurements, and this causes unnecessary work and expenses and delays in the delivery of the measurement results.

## Summary of the invention

An aim of the invention is to provide method for measuring the concentration of at least two analytes in a biological liquid sample by means of a set of ion selective electrodes each of which is suitable for measuring one of those analytes, one of those analytes being sodium and another of those analytes being potassium, and the method including steps for detecting deviations of the potential difference measured with the ion-selective electrodes which are caused by disturbances like air-bubbles in the sample channel of the ISE or electrostatic discharges.

According to the invention the above aim is achieved by means of a method defined by claim 1. Claims 2 and 3 define preferred embodiments of this method.

The main advantages obtained with a method according to the invention are as follows:

All questionable deviations of the potential differences measured with the ion-selective electrodes are identified, and flagged. Reporting of questionable results as correct ones is thus reliably prevented.

Valid measurement results are not erroneously identified as doubtful. Erroneous reporting of valid results as doubtful ones and unnecessary repetition of measurements caused by such reports is thus reliably prevented.

The reliability and accuracy of the results of measurement performed with the ion-selective electrodes is ensured in particular when air-bubbles alter the measurement conditions in the measurement chamber and/or electrical disturbances occur, and when other implemented plausibility checks of the operation of the ion-selective electrodes fail.

Any flag already implemented in the analyzer system is suitable for being used as a flag to be attached to a result which is found doubtful by the method according to the invention. It is therefore not necessary to implement a new flag in the software of the analyzer. The risk associated with the implementation of a new flag in the system software and validation efforts with respect to that software are thus avoided.

The method according to the invention does not require any modification of existing system interfaces with laboratory information systems/communication protocols.

## Brief description of the drawings

The subject invention will now be described in terms of its preferred embodiments with reference to the accompanying drawings. These embodiments are set forth to aid the understanding of the invention, but are not to be construed as limiting.

Fig. 1 shows a table (Table 1) showing in columns 11 to 16 a list of results for measurement results obtained with ion-selective-electrodes for different samples and in columns 17 to 21 results of calculations and checks obtained with a method according to the invention.

Fig. 2 shows a flow chart illustrating steps of a method according to the invention, and in particular checks 1 to 3 mentioned in Table 1 in Fig. 1.

## Reference symbols used in drawings

$SS_N$      potential difference measured with a sodium sensitive ion-selective-electrode for the Nth sample of a series of successively measured samples

$ConcS_N$   concentration of sodium calculated on the basis of $SS_N$

$SP_N$      potential difference measured with a potassium sensitive ion-selective-electrode for the Nth sample of a series of successively measured samples

$ConcP_N$   concentration of potassium calculated on the basis of $SP_N$

$CS_N$        voltage measured for the sodium one-point calibration for the Nth sample

$CS_{N-1}$        voltage measured for the sodium one-point calibration for the (N-1)th sample

$CP_N$        voltage measured for the potassium one-point calibration for the Nth sample

$CP_{N-1}$        voltage measured for the potassium one-point calibration for the (N-1)th sample

C1        calculation of the value $|CS_N - CS_{N-1}|$

C2        calculation of the value $|CP_N - CP_{N-1}|$

Detailed description of the invention

A preferred embodiment of a method according to the invention is described hereinafter with reference to the accompanying drawings.
The method described hereinafter as example is a method for measuring the concentration of at least two analytes in a biological liquid sample by means of a set of ion selective electrodes each of which is suitable for measuring one of those analytes, one of those analytes being sodium and another of those analytes being potassium. This method includes steps for detecting deviations of potential differences measured which are caused by disturbances of the measurement conditions, e.g. air-bubbles in the sample channel of a ion-selective electrodes or electrostatic discharges, and steps for marking with flags measurement results which are found doubtful.

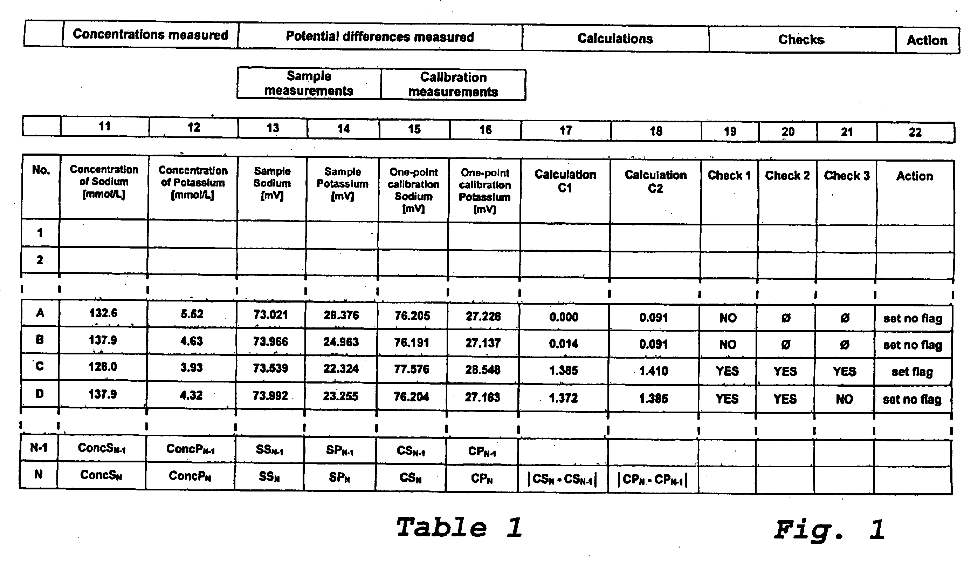

Fig. 1 shows a table (Table 1) showing in columns 11 to 16 a list of results for measurement results obtained with ion-selective-electrodes for different samples and in columns 17 to 21 results of calculations and checks obtained with a method according to the invention. The measurement results indicated in columns 13 to 16 in one of the rows of Table 1 are those obtained for one of a plurality of different samples numbered 1 to N.
The example of a method according to the invention herein described comprises the following steps:

Step (a): Measuring a series of different biological samples of the same kind, e.g. diluted blood samples, with a set of ion selective electrodes, obtaining from the ion selective electrodes voltage values in millivolt which are representative of the concentration of sodium and potassium respectively in each of those biological samples, and storing the latter values in a suitable form for electronic data processing. Columns 13 and 14 of Table 1 show examples of those values for a plurality of measurements of different samples numbered 1 to N. The voltage measured with the sodium measuring electrode for the Nth sample is designated by $SS_N$ and the corresponding value of the concentration of sodium calculated on the basis of $SS_N$ is designated by $ConcS_N$ and is noted in column 11. The voltage measured with the potassium measuring electrode for the Nth sample is designated by $SP_N$ and the corresponding value of the concentration of potassium calculated on the basis of $SP_N$ is designated by $ConcP_N$ and is noted in column 12. The respective values obtained for the N-1 sample are designated in a similar way, but with the subindex N-1.

Step (b): Measuring a calibration standard for sodium and potassium with the respective ion selective electrodes after measuring each of the biological samples according to step (a), obtaining from the ion selective electrodes voltage values in millivolt which are representative of the concentration of sodium and potassium respectively in each of those calibration standards, and storing the latter values in a suitable form for electronic data processing. Columns 15 and 16 of Table 1 show examples of those values associated with corresponding measurements of a plurality of different samples numbered 1 to N. The voltage values indicated in columns 15 and 16 of each row of Table 1 are those associated with or corresponding to the voltage values indicated in columns 13 and 14 of the same row of Table 1. The voltage measured for the sodium one-point calibration for the Nth sample is designated by $CS_N$. The voltage measured for the potassium one-point calibration for the Nth sample is designated by $CP_N$. The respective values obtained for the N-1 sample are designated in a similar way, but with the subindex N-1.

Step (c): Verifying by a predetermined procedure (described in detail hereinafter) whether each of the values in millivolt obtained by measuring the calibration standards according to step (b) has an abnormal value caused by a disturbance in the operation of one of the ion selective electrodes, and if this is the case

Step (d): Marking with a flag as doubtful the measurement results obtained for the corresponding sample which was measured before measuring the calibration standards for sodium and potassium according to step (b).

In a preferred embodiment said measuring of a calibration standard for sodium and potassium with the respective ion selective electrodes according to step (b) takes place immediately after measuring each of said biological samples according to step (a), and said marking with a flag as doubtful the measurement results obtained according to step (d) is effected for the corresponding sample which was measured immediately before measuring the calibration standards for sodium and potassium according to step (b).

The voltage values obtained according to step (a) for a given sample and the voltage values obtained according to step (b) form a set of values of a measurement result for a given sample, e.g. for one of the 1 to N samples mentioned in Table 1.

An example of a predetermined procedure mentioned above in Step (c) for verifying whether the values in millivolt obtained by measuring the calibration standards according to step (b) have an abnormal value comprises processing measured voltages in millivolt obtained according to step (b) for successive measurement results corresponding to different samples (N and N-1), and the processing comprises the following steps:

Step (i): calculating and storing the absolute value ($\Delta CS_N = |CS_N-CS_{N-1}|$) of the difference of the voltages measured by the electrode for sodium which correspond to a sample (N) and to the immediately preceding sample (N-1),

Step (ii): calculating and storing the absolute value ($\Delta CP_N = |CP_N-CP_{N-1}|$) of the difference of the voltages measured by the electrode for potassium which correspond to a sample (N) and to the immediately preceding sample (N-1),

Step (iii): verifying whether each of the calculated and stored absolute values of the changes calculated in steps (i) and (ii) is larger than a first predetermined threshold value, and if the result of this verification is positive

Step (iv): verifying whether the calculated and stored absolute values obtained in steps (i) and (ii) differ from each other by an amount which is smaller than a second predetermined threshold value, and if the result of this verification is positive

Step (v): verifying whether the calculated absolute values obtained in step (i) for a sample (N) and for the immediately preceding sample (N-1) differ from each other by an amount which is larger than a third predetermined threshold value, and if the result of this verification is positive

Step (vi): generating a signal indicating that the measurement results of the sample (N) are doubtful.

In a preferred embodiment the first predetermined threshold value in Step (iii) is 0.8 millivolt, the second predetermined threshold value in Step (iv) is 0.25 millivolt, and the third predetermined threshold value in Step (v) is 0.25 millivolt.

The threshold values indicated above have been obtained experimentally from experiences with the absolute value of deviations in one-point calibration mV-values. Threshold values which sensibly differ from those indicated above are not adequate for the intended purpose, either because they are insensitive (e.g. using a threshold value of 1.2 mV in Check 1), or too sensitive (e.g. applying a limit of 0.1 in Checks 2 and 3).

Columns 17 and 18 of Table 1 show some of calculation results C1 and C2 obtained with Steps (i) and (ii) for a series of samples 1 to N. For successive samples designated by the letters A, B, C and D numerical values are indicated as examples.

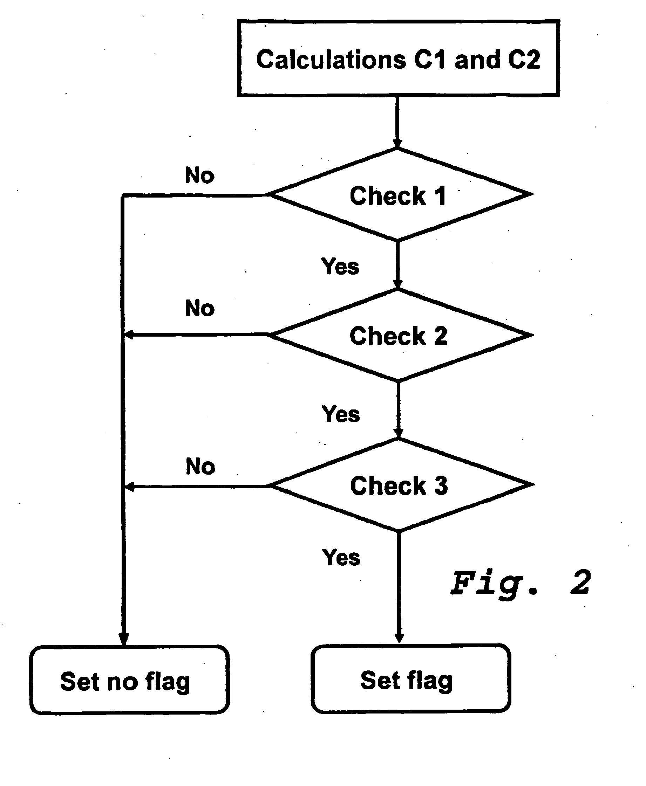

Columns 19 to 21 of Table 1 indicate for samples A, B, C and D the result of the verification according to Step (iii) designated as Check 1, the result of the verification according to Step (iv) designated as Check 2 and the result of the verification according to Step (v) designated as Check 3. The symbol 0 used in Table 1, columns 20 and 21 for samples A and B, means that for these samples the result of Check 2 is not determined. This is so, because according to the flow chart represented by Fig. 2, Check 2 is not carried out, because the result of Check 1 is negative.

Fig. 2 shows a flow chart illustrating steps of the above described method according to the invention, and in particular checks 1 to 3 mentioned in Table 1 in Fig. 1 performed on the basis of the values calculated and stored according to steps (i) and (ii).

As illustrated by Fig. 2 a flag indicative of an abnormal result is only set if the results of Check 1 and Check 2 and Check 3 are positive. If this condition is not satisfied, no flag is set and this is equivalent to recognition of a measurement result as being valid.

As shown by Table 1, all three Checks 1, 2 and 3 provide positive results for the measurement results in the row designated with the letter C, whereas for the measurement results in the rows designated with the letters A, B and D at least one of Checks 1, 2 and 3 provides a negative result.

Comparison of the results in row C, columns 17 and 18 of Table 1 with the results listed in rows B and D, columns 17 and 18 of Table 1 shows that the results for both sodium and potassium in these rows are lower than in row C, although the sample mV values at least for sodium (column 13) are nearly identical. The mV-values for the one-point calibrations of both electrodes are elevated for measurement of row C, columns 17 and 18, compared to those obtained for rows B and D, columns 17 and 18, and approximately by the same amount (1.38mV, and 1.41mV, respectively).

The above described method is applicable not only to sodium and potassium, but also to other analytes, e.g. sodium and an analyte other than potassium.

When the laboratory where the ISE measurements are performed on samples starts its daily operation and the measurement values of row 1 of Table 1 are obtained there are no measurement values of an immediately preceding sample. In this case one-point calibration mV-values generated and stored in the system during a main calibration are employed as initial values in order to be able to perform the calculations and verifications of the above described method also for the measurement results in row 1 of Table 1.

Main calibrations are conducted at defined intervals, and it is regarded as good laboratory practices to confirm a calibration by means of quality control samples. Their results are thoroughly scrutinized prior to acceptance, and it is thus ensured that a calibration is correct.

Additionally, several independent checks applied to main calibration results also ensure that the mV-values generated during a main calibration are trustworthy if unflagged and if quality control results are within allowed ranges.

A main calibration procedure is carried out e.g. as follows:

Samples, standard calibration solutions for ISE, or quality control liquids are transferred to the measurement chamber of the ISE-module via the automatic pipetting unit of the clinical diagnostic analyzer the ISE-module belongs to, whereas one-point calibrator liquids are directly sucked from a bottle located close to the ISE-Module and directly supplied to the measurement chamber of the ISE-Module.

Thus, samples or standard calibration solutions for ISE, or quality control liquids are handled differently than the one-point calibrator liquids. This may result in accuracy problems, if not corrected correspondingly. It is e.g. possible that the dilution ratio changes over time on a given system, or that there are variations of dilution ratios actually provided by different systems, especially if a large number of them is considered (e.g. >1000).

To compensate for such differences that may affect the accuracy of the ISE measurement results obtained with the analyzer system, the so called Solution 1-Factor (SOL1F) correction is implemented as described hereinafter.

Predetermined volumes of the following calibration standards are used:

Sol 1 is a calibration standard having a first concentration value.
Cal is another calibration standard having a second concentration value.
Sol 2is a calibration standard having a third concentration value.

The following Table 2 shows steps and measurements results obtained for the calculation of the above mentioned correction factor SOL1F.

Table 2: Steps and measurements results obtained for the calculation of the above mentioned correction factor SOL1F.

| Step | Action preceding measurement with ion-selective electrode | Measurement result obtained with ion-selective electrode |
| --- | --- | --- |
| 1 | First pipetting of Sol 1 | mVSol 1_1 |
| 2 | First sucking of Cal | mVCal_1 |
| 3 | Second pipetting of Sol 1 | mVSol 1_2 |
| 4 | Second sucking of Cal | mVCal_2 |
| 5 | Pipetting of Sol 2 | mVSol 2 |

The measured value mVCal_2 is the start value for one-point calibration checks according to the invention when no preceding measurement values are available, e.g. at the beginning of the daily operation of the ISE module.

Using the one-point calibration measurement result mVCal_2 obtained in step 4 of the above sequence of steps 1 to 5 ensures that only such results are used as starting point for the subsequent checks which have been checked for their integrity by different means.

After the measurements of the above mentioned steps 1-5 are completed, the following calculations are performed:

Calculation of Slope according to:

$$(1)\ Slope = \frac{mVSol1\_2 - mVSol\_2}{\log \dfrac{C_{Sol1}}{C_{Sol2}}}$$

with

$C_{Sol1}$ = concentration of the ion in Sol 1 (e.g. Sodium=150mM)

$C_{Sol2}$ = concentration of the ion in Sol 2 (e.g. Sodium =110mM)

log = logarithmus to base 10

The dimension of the Slope is mV/decade.

The resulting slope is checked whether it is within the allowed limits, which themselves are specified in the corresponding test settings of the system.

The SOL1-Factor is calculated according to:

$$(2) \quad SOL1F = \frac{mVSol\_1\_1 + mVSol\_1\_2}{mVCal\_1 + mVCal\_2}$$

The correction factor SOL1F has no dimension.

SOL1F is a correction factor for calculation of concentration values.

$$(3) \quad ConcMeas = C_{Sol\_1} * 10^{\frac{mVSol\_1\_2 - mVCal2 \cdot SOL1F}{Slope}}$$

The same variables as in (1) and (2) above are used.

Conc.Meas is the calculated value of the concentration of Sol 1.

The calculated value ConcMeas is obtained using the values for the Slope and SOL1F as they have been calculated by equations (1) and (2).

Since Sol 1 is employed for the measurement the target concentration is known.

Using Sodium as an example, this is 150mmol/L. Conc.Meas is now checked for its deviation from that value according to (4) 148.8 mmol/L <Conc.Meas< 151.2mmol/L

If this check is fulfilled the main calibration provides a sound basis for future one-point calibrations and ensures the reliability and accuracy of the measurement results obtained. Otherwise, i.e. if the above check (4) is not fulfilled, a flag is attached to all results generated with this main calibration.

Although preferred embodiments of the invention have been described using specific terms, such description is for illustrative purposes only, and it is to be understood that changes and variations may be made without departing from the spirit or scope of the following claims.

**Claims**

1. A method for measuring the concentration of at least two analytes in a biological liquid sample by means of a set of ion selective electrodes each of which is suitable for measuring one of those analytes, one of those analytes being sodium and another of those analytes being potassium, said method comprising the following steps:

   (a) measuring a series of different biological samples of the same kind with said set of ion selective electrodes, obtaining from the ion selective electrodes voltage values in millivolt which are representative of the concentration of sodium and potassium respectively in each of those biological samples, and storing the latter values in a suitable form for data processing,
   (b) measuring a calibration standard for sodium and potassium with the respective ion selective electrodes after measuring each of said biological samples according to step (a), obtaining from the ion selective electrodes voltage values in millivolt which are representative of the concentration of sodium and potassium respectively in each of those calibration standards, and storing the latter values in a suitable form for data processing,
   (c) verifying whether each of said values in millivolt obtained by measuring said calibration standards according to step (b) has an abnormal value caused by a disturbance in the operation of one of the ion selective electrodes, the latter verification comprises processing measured voltages in millivolt obtained according to step (b) for successive measurement results corresponding to different samples (N and N-1), and said processing comprises:

      (i) calculating and storing the absolute value ($\Delta CS_N = |CS_N - CS_{N-1}|$) of the difference of the voltages measured by the electrode for sodium which correspond to a sample (N) and to the immediately preceding sample (N-1),

(ii) calculating and storing the absolute value ($\Delta CP_N = |CP_N-CP_{N-1}|$) of the difference of the voltages measured by the electrode for potassium which correspond to a sample (N) and to the immediately preceding sample (N-1),

(iii) verifying whether each of the calculated and stored absolute values of the changes calculated in steps (i) and (ii) is larger than a first predetermined threshold value, and if the result of this verification is positive

(iv) verifying whether the calculated and stored absolute values obtained in steps (i) and (ii) differ from each other by an amount which is smaller than a second predetermined threshold value, and if the result of this verification is positive

(v) verifying whether the calculated absolute values obtained in step (i) for a sample (N) and for the immediately preceding sample (N-1) differ from each other by an amount which is larger than a third predetermined threshold value, and if the result of this verification is positive,

(vi) generating a signal indicating that the measurement results of the sample (N) are doubtful, and

(d) marking with a flag as doubtful the measurement results obtained for the corresponding sample which was measured before measuring the calibration standards for sodium and potassium according to step (b).

2. A method according to claim 1, wherein

said measuring of a calibration standard for sodium and potassium with the respective ion selective electrodes according to step (b) takes place immediately after measuring each of said biological samples according to step (a), and

said marking with a flag as doubtful the measurement results obtained according to step (d) is effected for the corresponding sample which was measured immediately before measuring the calibration standards for sodium and potassium according to step (b).

3. A method according to any of claims 1 or 2, wherein said first predetermined threshold value is 0.8 millivolt, said second predetermined threshold value is 0.25 millivolt, and said third predetermined threshold value is 0.25 millivolt.

**Patentansprüche**

1. Verfahren zur Messung der Konzentration von mindestens zwei Analyten in einer biologischen Flüssigkeitsprobe mittels eines Satzes ionenselektiver Elektroden, von denen jede zur Messung eines dieser Analyten geeignet ist, wobei einer dieser Analyten Natrium ist und ein anderer dieser Analyten Kalium ist, wobei das Verfahren die folgenden Schritte aufweist:

(a) Messen einer Reihe unterschiedlicher biologischer Proben derselben Art mit dem Satz ionenselektiver Elektroden, Erhalten aus den ionenselektiven Elektroden Spannungswerte in Millivolt, die für die Konzentration von Natrium bzw. Kalium in jeder dieser biologischen Proben repräsentativ sind, und Speichern der letztgenannten Werte in einer geeigneten Form zur Datenverarbeitung,

(b) Messen eines Eichnormals für Natrium und Kalium mit den jeweiligen ionenselektiven Elektroden nach dem Messen jeder der biologischen Proben gemäß des Schritts (a), Erhalten aus den ionenselektiven Elektroden von Spannungswerten in Millivolt, die für die Konzentration von Natrium bzw. Kalium in jedem dieser Eichnormale repräsentativ sind, und Speichern der letztgenannten Werte in einer geeigneten Form zur Datenverarbeitung,

(c) Nachprüfen, ob jeder der Werte in Millivolt, die durch Messen der Eichnormale gemäß des Schritts (b) erhalten werden, einen abnormalen Wert aufweist, der durch eine Störung des Betriebs einer der ionenselektiven Elektroden verursacht wird, wobei die letztgenannte Nachprüfung das Verarbeiten gemessener Spannungen in Millivolt, die gemäß des Schritts (b) erhalten werden, für aufeinander folgende Messergebnisse umfasst, die unterschiedlichen Proben (N und N-1) entsprechen, und das Verarbeiten Folgendes umfasst:

(i) Berechnen und Speichern des Absolutwerts ($\Delta CS_N = |CS_N-CS_{N-1}|$) der Differenz der Spannungen, die durch die Elektrode für Natrium gemessen werden, die einer Probe (N) und der unmittelbar vorhergehenden Probe (N-1) entsprechen,

(ii) Berechnen und Speichern des Absolutwerts ($\Delta CP_N = |CP_N-CP_{N-1}|$) der Differenz der Spannungen, die durch die Elektrode für Kalium gemessen werden, die einer Probe (N) und der unmittelbar vorhergehenden Probe (N-1) entsprechen,

(iii) Nachprüfen, ob jeder der berechneten und gespeicherten Absolutwerte der in den Schritten (i) und (ii) berechneten Änderungen größer als ein erster vorgegebener Schwellenwert ist, und wenn das Ergebnis dieser Nachprüfung positiv ist,

(iv) Nachprüfen, ob die berechneten und gespeicherten Absolutwerte, die in den Schritten (i) und (ii) erhalten werden, sich voneinander um einen Betrag unterscheiden, der kleiner als ein zweiter vorgegebener Schwellenwert ist, und wenn das Ergebnis dieser Nachprüfung positiv ist,

(v) Nachprüfen, ob die berechneten Absolutwerte, die im Schritt (i) für eine Probe (N) und für die unmittelbar vorhergehende Probe (N-1) erhalten werden, sich voneinander um einen Betrag unterscheiden, der größer als ein dritter vorgegebener Schwellenwert ist, und wenn das Ergebnis dieser Nachprüfung positiv ist,

(vi) Erzeugen eines Signals, dass die Messergebnisse der Probe (N) zweifelhaft sind, und

(d) Markieren der Messergebnisse mit einem Merker als zweifelhaft, die für die entsprechende Probe erhalten werden, die vor dem Messen der Eichnormale für Natrium und Kalium gemäß des Schritts (b) gemessen wurden.

2. Verfahren nach Anspruch 1, wobei
das Messen eines Eichnormals für Natrium und Kalium mit den jeweiligen ionenselektiven Elektroden gemäß des Schritts (b) unmittelbar nach dem Messen jeder der biologischen Proben gemäß des Schritts (a) stattfindet, und das Markieren der Messergebnisse mit einem Merker als zweifelhaft, die gemäß des Schritts (d) erhalten werden, für die entsprechende Probe durchgeführt wird, die unmittelbar vor dem Messen der Eichnormale für Natrium und Kalium gemäß des Schritts (b) gemessen wurde.

3. Verfahren nach einem der Ansprüche 1 oder 2, wobei der erste vorgegebene Schwellenwert 0,8 Millivolt beträgt, der zweite vorgegebene Schwellenwert 0,25 Millivolt beträgt, und der dritte vorgegebene Schwellenwert 0,25 Millivolt beträgt.

## Revendications

1. Procédé de mesure de la concentration d'au moins deux analytes dans un échantillon de liquide biologique à l'aide d'un jeu d'électrodes sélectives vis-à-vis des ions dont chacune convient pour la mesure de l'un de ces analytes, l'un de ces analytes étant le sodium et l'autre de ces analytes étant le potassium, ledit procédé comprenant les étapes suivantes :

(a) de mesure d'une série d'échantillons biologiques différents du même type avec ledit jeu d'électrodes sélectives vis-à-vis des ions, d'obtention des valeurs de tension des électrodes sélectives vis-à-vis des ions en millivolt(s) qui sont représentatives respectivement de la concentration du sodium et du potassium dans chacun de ces échantillons biologiques, et de stockage des dernières valeurs sous une forme convenant au traitement de données,

(b) de mesure d'un étalon de calibrage pour le sodium et le potassium avec les électrodes respectives sélectives vis-à-vis des ions après mesure de chacun desdits échantillons biologiques selon l'étape (a), d'obtention des valeurs de tension des électrodes sélectives vis-à-vis des ions en millivolt(s) qui sont représentatives respectivement de la concentration du sodium et du potassium dans chacun de ces étalons de calibrage, et de stockage des dernières valeurs sous une forme convenant au traitement de données,

(c) de vérification du fait que chacune desdites valeurs en millivolt(s) obtenues par mesure desdits étalons de calibrage selon l'étape (b) a une valeur anormale provoquée par une perturbation du fonctionnement de l'une des électrodes sélectives vis-à-vis des ions, la dernière vérification comprend le traitement des tensions mesurées en millivolt(s) obtenues selon l'étape (b) pour des résultats de mesure successifs correspondants à différents échantillons (N et N-1), et ledit traitement comprend :

(i) le calcul et le stockage de la valeur absolue ($\Delta CS_N = |CSN - CS_{N-1}|$) de la différence des tensions mesurées par l'électrode pour le sodium qui correspond à un échantillon (N) et à l'échantillon immédiatement précédent (N-1),

(ii) le calcul et le stockage de la valeur absolue ($\Delta CP_N = |CPN - CP_{N-1}|$) de la différence des tensions mesurées par l'électrode pour le potassium qui correspond à un échantillon (N) et à l'échantillon immédiatement précédent (N-1),

(iii) la vérification du fait que chacune des valeurs absolues calculées et stockées des changements calculés dans les étapes (i) et (ii) est plus grande qu'une première valeur seuil prédéterminée, et si le résultat de cette vérification est positif,

(iv) la vérification du fait que les valeurs absolues calculées et stockées obtenues dans les étapes (i) et (ii) diffèrent l'une de l'autre d'une quantité qui est plus petite qu'une seconde valeur seuil prédéterminée, et si le résultat de cette vérification est positif,

(v) la vérification du fait que les valeurs absolues calculées obtenues dans l'étape (i) pour un échantillon (N) et pour l'échantillon immédiatement précédent (N-1) diffèrent l'une de l'autre d'une quantité qui est plus grande qu'une troisième valeur seuil prédéterminée, et si le résultat de cette vérification est positif,

(vi) la production d'un signal indiquant que les résultats de mesure de l'échantillon (N) sont douteux, et

(d) la signalisation avec un drapeau comme douteux des résultats de mesure obtenus pour l'échantillon correspondant qui a été mesuré avant la mesure des étalons de calibrage pour le sodium et le potassium selon l'étape (b).

2. Procédé selon la revendication 1, dans lequel
ladite mesure d'un étalon de calibrage pour le sodium et le potassium avec les électrodes respectives sélectives vis-à-vis des ions selon l'étape (b) a lieu immédiatement après la mesure de chacun desdits échantillons biologiques selon l'étape (a), et
ledit marquage avec un drapeau comme douteux des résultats de mesure obtenus selon l'étape (d) est effectué pour l'échantillon correspondant qui était mesuré immédiatement avant la mesure des étalons de calibrage pour le sodium et le potassium selon l'étape (b).

3. Procédé selon l'une quelconque des revendications 1 ou 2, dans lequel ladite première valeur seuil prédéterminée est 0,8 millivolt, ladite seconde valeur seuil prédéterminée est 0,25 millivolt, et ladite troisième valeur seuil prédéterminée est 0,25 millivolt.

| | Concentrations measured | | Potential differences measured | | | | Calculations | | Checks | | | Action |
|---|---|---|---|---|---|---|---|---|---|---|---|---|
| | | | Sample measurements | | Calibration measurements | | | | | | | |
| | 11 | 12 | 13 | 14 | 15 | 16 | 17 | 18 | 19 | 20 | 21 | 22 |
| No. | Concentration of Sodium [mmol/L] | Concentration of Potassium [mmol/L] | Sample Sodium [mV] | Sample Potassium [mV] | One-point calibration Sodium [mV] | One-point calibration Potassium [mV] | Calculation C1 | Calculation C2 | Check 1 | Check 2 | Check 3 | Action |
| 1 | | | | | | | | | | | | |
| 2 | | | | | | | | | | | | |
| A | 132.6 | 5.52 | 73.021 | 29.376 | 76.205 | 27.228 | 0.000 | 0.091 | NO | Ø | Ø | set no flag |
| B | 137.9 | 4.63 | 73.966 | 24.963 | 76.191 | 27.137 | 0.014 | 0.091 | NO | Ø | Ø | set no flag |
| C | 128.0 | 3.93 | 73.539 | 22.324 | 77.576 | 28.548 | 1.385 | 1.410 | YES | YES | YES | set flag |
| D | 137.9 | 4.32 | 73.992 | 23.255 | 76.204 | 27.163 | 1.372 | 1.385 | YES | YES | NO | set no flag |
| N-1 | $ConcS_{N-1}$ | $ConcP_{N-1}$ | $SS_{N-1}$ | $SP_{N-1}$ | $CS_{N-1}$ | $CP_{N-1}$ | | | | | | |
| N | $ConcS_N$ | $ConcP_N$ | $SS_N$ | $SP_N$ | $CS_N$ | $CP_N$ | $|CS_N - CS_{N-1}|$ | $|CP_N - CP_{N-1}|$ | | | | |

<div align="center">

*Table 1*                         *Fig. 1*

</div>

EP 1 906 180 B1

Calculations C1 and C2

No — Check 1

Yes

No — Check 2

Yes

No — Check 3

Yes

*Fig. 2*

Set no flag

Set flag

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K CAMMANN ; H GALSTER.** Das Arbeiten mit ionenselektiven Elektroden. Springer Verlag, 1996